(19) Europäisches Patentamt
European Patent Office
Office européen des brevets

(11) Veröffentlichungsnummer: **0 053 286**
**B1**

(12) **EUROPÄISCHE PATENTSCHRIFT**

(45) Veröffentlichungstag der Patentschrift: **24.07.85**

(51) Int. Cl.⁴: **B 01 J 2/30,** C 05 G 3/00

(21) Anmeldenummer: **81109210.5**

(22) Anmeldetag: **29.10.81**

(54) **Verwendung von Alkylenoxidadditionsprodukten als Antibackmittel für Dünger.**

(30) Priorität: **29.11.80 DE 3045131**

(43) Veröffentlichungstag der Anmeldung: **09.06.82 Patentblatt 82/23**

(45) Bekanntmachung des Hinweises auf die Patenterteilung: **24.07.85 Patentblatt 85/30**

(84) Benannte Vertragsstaaten: **AT CH DE GB LI LU**

(56) Entgegenhaltungen:
**DE - A - 2 525 568**
**FR - A - 1 314 559**
**GB - A - 1 383 718**
**US - A - 3 207 791**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Grünert geb. Hartlieb, Margarete, Flottheide 9, D-4044 Kaarst (DE)**
Erfinder: **Tesmann, Holger, Dr., Vennstrasse 61, D-4000 Düsseldorf 12 (DE)**

**EP 0 053 286 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist die Verwendung von Ethylenoxid- und/oder Propylenoxidadditionsprodukten bestimmter β-Hydroxyalkylamine als Antibackmittel für Düngersalze und Düngersalzmischungen.

Eine Reihe von anorganischen Salzen, die als Düngemittelkomponenten Verwendung finden, darunter beispielsweise Kaliumchlorid, Natriumnitrat, Ammoniumnitrat, Ammoniumsulfat und Diammoniumphosphat, ist hygroskopisch und neigt unter dem Einfluss von Feuchtigkeit, Temperaturwechsel und Druck zum Zusammenbacken und Zusammenfliessen. Zusammenbackende Düngemittelgemische sind für die übliche Massenlagerung nicht geeignet, da sie nach der Lagerung nicht ohne weiteres mit Hilfe maschineller Verteilungsgeräte ausgestreut werden können.

Zur Verringerung des Zusammenbackens werden viele Dünger in Form von Granulaten gleichmässiger Grösse hergestellt und mit Talkum, Kieselgur, Diatomeenerde oder Kreide gepudert, um durch Oberflächenbedeckung die Absorption von Feuchtigkeit durch das Düngemittel zu verhindern. Diese Stoffe müssen jedoch in relativ grossen Mengen zugesetzt werden, was zu einer erheblichen Staubbelästigung führt.

Aus der US-Patentschrift 2 480 694 ist bekannt, dass Fettamine sowie deren Hydrochloride und Acetate das Zusammenbacken von Düngemittelsalzen verhindern. Die Verwendung von Lösungen von Fettaminen und Aminoalkylfettaminen in Mineralöl und deren Aufsprühen auf die Düngermischungen ist in der US-Patentschrift 3 186 828 beschrieben. Demnach werden im allgemeinen Fettamine oder Aminoalkylfettamine mit einem Alkyl- oder Alkylenrest mit 8 bis 22 Kohlenwasserstoffatomen sowie deren Salze zur Verhinderung des Zusammenbackens von chemischen Düngemitteln eingesetzt. Der Verwendung dieser Produkte steht jedoch nachteilig entgegen, dass die Fettamine und deren Derivate bei Normaltemperatur fast ausschliesslich als Feststoffe vorliegen, so dass sie zur Anwendung aufgeschmolzen oder in einem Lösungsmittel gelöst werden müssen, wobei die Verwendung von Lösungsmitteln, insbesondere von Mineralölen, wegen der damit verbundenen Umweltbelastung kaum noch in Betracht kommt. Ausserdem wirken Fettamine und Fettaminderivate bei Haut- und Schleimhautkontakt stark ätzend und ihr Amingeruch wird bei der Handhabung der behandelten Dünger als überaus lästig empfunden.

Die Patentschrift FR-A-1 314 559 beschreibt als Antibackmittel für pulverförmige oder granulierte Substanzen kationische Mittel der Formel $R \cdot NH_2$ in der R einen Alkylrest mit 8 bis 22 Kohlenstoffatomen darstellt, sowie eine Reihe von Derivaten solcher Verbindungen, u. a. Reaktionsprodukte dieser Amine mit Ethylenoxid, Propylenoxid oder Butylenoxid. Spezielle Angaben über die Wirkungsweise von Alkylenoxidanlagerungsprodukten im Vergleich zu den entsprechenden Aminen sind in dieser Patentschrift nicht enthalten.

Die in der DE-Offenlegungsschrift 2 525 568 als Antibackmittel beschriebenen vicinalen Aminoalkanole sind im wesentlichen frei von den oben genannten Nachteilen; bei der praktischen Anwendung ist aber ihre Anticakingwirkung nicht voll befriedigend.

Es wurde nun gefunden, dass bestimmte Ethylenoxid- und/oder Propylenoxidadditionsprodukte von β-Hydroxyalkyldiethanolaminen frei von den Nachteilen der Fettamine und Fettaminderivate sind und überdies gegenüber den vicinalen Aminoalkanolen eine wesentlich bessere Anticakingwirkung besitzen.

Gegenstand der Erfindung ist demnach die Verwendung von Additionsprodukten aus 6 bis 15 Mol Ethylenoxid und/oder Propylenoxid und 1 Mol eines β-Hydroxyalkylamins der Formel I,

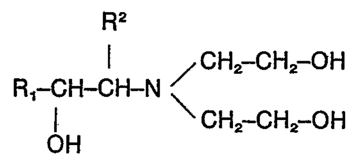
(I)

in der $R^1$ ein Alkylrest mit 1 bis 18 Kohlenstoffatomen und $R^2$ Wasserstoff oder ein Alkylrest mit 1 bis 16 Kohlenstoffatomen ist, wobei die Summe der Kohlenstoffatome in $R^1$ und $R^2$ 8 bis 18 beträgt, als Antibackmittel für Düngemittel.

Bei den β-Hydroxyalkylaminen der Formel I, die als Ausgangsmaterial für die Herstellung der erfindungsgemäss zu verwendenden Additionsprodukte dienen, handelt es sich in der Regel um Substanzgemische, die zweckmässigerweise durch Umsetzung von Diethanolamin mit Gemischen aus Olefinepoxiden der Formel II,

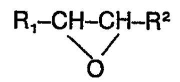
(II)

in der $R^1$ und $R^2$ die für die Formel I angegebene Bedeutung haben, nach bekannter Methode erhalten werden.

Die Olefinepoxide der Formel II können ihrerseits aus entsprechenden Monoolefinen mit endständigen oder nichtendständigen Doppelbindungen hergestellt werden. Hierbei werden einerseits Olefingemische verwendet, wie sie durch katalytische Dehydrierung oder durch Chlorierung und nachfolgende Dehydrochlorierung von linearen Paraffinen mit 10 bis 20 Kohlenstoffatomen und selektiver Extraktion der Monoolefine erhalten werden. Diese Monoolefine enthalten hauptsächlich nichtendständige Doppelbindungen, die willkürlich über die Kohlenstoffkette verteilt sind. Andererseits können auch Olefingemische eingesetzt werden, die nach dem Ziegler-Verfahren auf aluminochemischem Wege hergestellt wurden und die unverzweigte Alkylketten mit 12 bis 20 Kohlenstoffatomen besitzen. In solchen Olefingemischen ist ein hoher Anteil an Olefinen mit endständiger Doppelbindung vorhanden. Für die Herstellung von Olefinepoxiden der Formel II eignen

sich beispielsweise handelsübliche Olefinfraktionen folgender Kettenlängenverteilung:

a) $C_{11-14}$-Fraktion

| | |
|---|---|
| $C_{11}$-Olefine, nichtendständig | ca. 22 Gew.-% |
| $C_{12}$-Olefine, nichtendständig | ca. 30 Gew.-% |
| $C_{13}$-Olefine, nichtendständig | ca. 26 Gew.-% |
| $C_{14}$-Olefine, nichtendständig | ca. 22 Gew.-% |

b) $C_{15-18}$-Fraktion

| | |
|---|---|
| $C_{15}$-Olefine, nichtendständig | ca. 26 Gew.-% |
| $C_{16}$-Olefine, nichtendständig | ca. 35 Gew.-% |
| $C_{17}$-Olefine, nichtendständig | ca. 31 Gew.-% |
| $C_{18}$-Olefine, nichtendständig | ca. 6 Gew.-% |

c) $C_{14-16}$-Fraktion

| | |
|---|---|
| $C_{14}$-Olefin, endständig | ca. 53 Gew.-% |
| $C_{16}$-Olefin, endständig | ca. 28 Gew.-% |
| $C_{14}$-Olefine, nichtendständig | ca. 7 Gew.-% |
| $C_{16}$-Olefine, nichtendständig | ca. 11 Gew.-% |

Weitere Olefinfraktionen sind im Beispielteil angegeben.

Die beschriebenen Monoolefingemische werden mit Hilfe bekannter Verfahren, beispielsweise mittels Persäuren, wie Peressigsäure zu den entsprechenden Epoxidgemischen umgesetzt, aus denen sich die β-Hydroxyalkylamingemische gemäss Formel I durch Reaktion mit Diethanolamin bei erhöhter Temperatur und gegebenenfalls unter erhöhtem Druck gewinnen lassen.

Aus den Verbindungen der Formel I werden schliesslich die erfindungsgemäss zu verwendenden Produkte durch Umsetzung mit der entsprechenden Molzahl Ethylenoxid und/oder Propylenoxid unter den bekannten Alkoxylierungsbedingungen erhalten.

Die Stockpunkte der erfindungsgemäss zu verwendenden Additionsprodukte liegen durchweg unterhalb von 20 °C. Aus diesem Grund lassen sich diese Substanzen leicht in geeigneten Mischapparaturen, z. B. in Drehtrommelmischern oder Schneckenfördermischern, direkt auf den Dünger aufbringen und gleichmässig verteilen. Die erfindungsgemäss zu verwendenden Produkte können aber auch in Form von Lösungen in organischen Lösungsmitteln oder Wasser eingesetzt werden. In diesem Fall liegt die Menge des erfindungsgemäss zu verwendenden Produktes zwischen 25 und 100 Gewichtsteilen pro 100 Gewichtsteile Lösungsmittel.

Die erfindungsgemäss zu verwendenden Alkylenoxidadditionsprodukte werden in Mengen von 0,005 bis 0,2 Gewichtsteilen pro 100 Gewichtsteile Düngemittel zum Einsatz gebracht.

Die nachfolgenden Beispiele sollen den Gegenstand der Erfindung erläutern, ohne ihn hierauf zu beschränken.

Beispiele

Als erfindungsgemäss zu verwendende Substanzen wurden Ethylenoxid- und/oder Propylenoxidanlagerungsprodukte der β-Hydroxyalkylamine I und II getestet. Das β-Hydroxyalkylamin I war durch Umsetzung von Diethanolamin mit einem Gemisch linearer $C_{12-14}$-Olefinepoxide erhalten worden, das seinerseits aus einer Olefinfraktion der folgenden Kettenlängenverteilung hergestellt war:

| | |
|---|---|
| $C_{12}$-Olefin, endständig | ca. 55 Gew.-% |
| $C_{14}$-Olefin, endständig | ca. 31 Gew.-% |
| $C_{12}$-Olefin, nichtendständig | ca. 5 Gew.-% |
| $C_{14}$-Olefin, nichtendständig | ca. 8 Gew.-%. |

Das β-Hydroxyalkylamin II stammte aus einer Umsetzung von Diethanolamin mit einem Gemisch linearer $C_{16-20}$-Olefinepoxide, das seinerseits aus einer Olefinfraktion der folgenden Kettenlängenverteilung hergestellt war:

| | |
|---|---|
| $C_{16}$-Olefin, endständig | ca. 35 Gew.-% |
| $C_{18}$-Olefin, endständig | ca. 23 Gew.-% |
| $C_{20}$-Olefin, endständig | ca. 2 Gew.-% |
| $C_{16}$-Olefin, nichtendständig | ca. 11 Gew.-% |
| $C_{18}$-Olefin, nichtendständig | ca. 21 Gew.-% |
| $C_{20}$-Olefin, nichtendständig | ca. 5 Gew.-%. |

Die β-Hydroxyalkylamine I und II wurden in bekannter Weise bei erhöhtem Druck und erhöhter Temperatur in Gegenwart von basischen Alkoxylierungskatalysatoren mit Ethylenoxid und/oder Propylenoxid zu den erfindungsgemäss zu verwendenden Produkten A bis H umgesetzt. In der Tabelle I sind diese Produkte durch das Ausgangsamin I oder II, die Art des Alkylenoxids (EO = Ethylenoxid; PO = Propylenoxid), die Anzahl der Mole Alkylenoxid, die mit einem Mol Amin umgesetzt wurden und durch ihre Stockpunkte charakterisiert. Wurden Ethylenoxid und Propylenoxid angelagert, so ist die Reihenfolge der Addition der Schreibweise analog.

Tabelle I

| Produkt | β-Hydroxy-alkylamin | pro Mol angelagertes Alkylenoxid | Stockpunkt °C |
|---|---|---|---|
| A | I | 9 EO | −32 |
| B | I | 12 EO | −31 |
| C | I | 9 PO | −31 |
| D | I | 4 EO + 4 PO | −40 |
| E | I | 4 PO + 4 EO | −42 |
| F | II | 9 EO | + 8 |
| G | II | 15 EO | 0 |
| H | II | 12 PO | −35 |

Als Vergleichssubstanzen wurden folgende Verbindungen eingesetzt:

I) Kokosamin ($C_{12}$–$C_{14}$-Alkyl); Stockpunkt + 15 °C; Erstarrungspunkt 16 °C,
J) Talgamin ($C_{16}$–$C_{18}$-Alkyl und -Alkylen); Erstarrungspunkt 25–30 °C,
K) Kokosaminhydrochlorid; Erstarrungspunkt ca. 100 °C, (Pulver)
L) Stearylaminacetat; Erstarrungspunkt ca. 55–65 °C, (Granulat),
M) Additionsprodukt aus Kokosamin und 10 Mol Ethylenoxid; Stockpunkt 0 °C,
N) N-β-Hydroxy-$C_{12-14}$-alkyl-ethylendiamin, hergestellt aus einem α-$C_{12-14}$-Olefinepoxidgemisch und Ethylendiamin,
O) N-β-Hydroxy-$C_{16-18}$-alkyl-ethylendiamin, hergestellt aus einem α-$C_{16-18}$-Olefinepoxidgemisch und Ethylendiamin,
P) Bis-(β'-hydroxyethyl)-β-hydroxy-$C_{12-14}$-alkylamin, hergestellt aus einem α-$C_{12-14}$-Olefinepoxidgemisch und Diethanolamin.

Die Antibackwirkung der erfindungsgemässen Produkte und der Vergleichssubstanzen wurde an folgenden Substraten getestet:

a) Kaliumchlorid, 100 Gew.-%
b) NPK-Dünger

Die NPK-Düngermischung entsprach der Zusammensetzung
32,6 Gew.-% $K_2SO_4$,
25,0 Gew.-% $NH_4H_2PO_4$,
9,4 Gew.-% Harnstoff,
33,0 Gew.-% $(NH_4)_2SO_4$.

Zur Herstellung der NPK-Düngermischung wurden die Salze getrocknet und gesiebt (0,8–1,0 mm) und anschliessend in einem Lödige-Mischer 20 Minuten lang gemischt.

Prüfmethode

Den Düngersalzen werden die Antibackmittel in flüssiger, granulierter oder Pulver-Form in Mengen von 0,1 und 0,01 Gewichtsteilen auf 100 Gewichtsteile Salz zugegeben. Anschliessend wird in einem Lödige-Mischer 5 Minuten lang durchgemischt.

Wenn es sich bei den verwendeten Antibackmitteln um Raumtemperatur feste Substanzen handelt, wird der Mischvorgang bei einer Temperatur durchgeführt, die über dem Schmelzpunkt des betreffenden Mittels liegt.

Jeweils 100 g des behandelten Düngers werden in ein Glasrohr (Durchmesser: 44 mm; Höhe: ca. 100 mm; aufgerauhte Innenflächen) eingefüllt, auf dessen Boden sich eine Ankerscheibe (Durchmesser: 15 mm) befindet, und über einen PVC-Stempel 30 Minuten lang mit einem Gewicht von ca. 10 kg belastet. Danach wird die Kraft ermittelt, die gerade ausreicht, um die Ankerscheibe herauszuziehen. Durch den Vergleich dieser Kraft mit derjenigen, die notwendig ist, um die Ankerscheibe aus dem unbehandelten Düngemittel herauszuziehen (Blindwert), erhält man ein Mass für die Wirksamkeit des geprüften Antibackmittels, wobei die Wirkung des Mittels um so besser ist, je kleiner diese Kraft ausfällt.

Beispiel 1

Nach der oben beschriebenen Methode wurde zunächst für Kaliumchlorid und NPK-Dünger an den unbehandelten Substraten der jeweilige Blindwert ermittelt. Anschliessend wurden Düngerproben geprüft, die mit jeweils 0,1 Gewichtsteilen der Substanzen A bis P pro 100 Gewichtsteilen Substrat behandelt waren. Die dabei erhaltenen Messergebnisse sind in der Tabelle II wiedergegeben. In den Spalten 3 und 5 der Tabelle II sind die gefundenen Messwerte in Prozentsätzen des jeweiligen Blindwertes angeführt.

Tabelle II

| Produkt | Kaliumchlorid Kraft (g) | % | NPK-Dünger Kraft (g) | % |
|---|---|---|---|---|
| Blindwert | | | | |
| – | 1240 | 100 | 1000 | 100 |
| Erfindungsgemäss zu verwendende Produkte | | | | |
| A | 340 | 27 | 510 | 51 |
| B | 340 | 27 | 510 | 51 |
| C | 360 | 29 | 330 | 33 |
| D | 350 | 28 | 300 | 30 |
| E | 450 | 36 | 350 | 35 |
| F | 360 | 29 | 470 | 47 |
| G | 400 | 32 | 450 | 45 |
| H | 360 | 29 | 450 | 45 |
| Vergleichssubstanzen | | | | |
| I | 390 | 31 | 510 | 51 |
| J | 480 | 39 | 330 | 33 |
| K | 500 | 40 | 910 | 91 |
| L | 170 | 14 | 690 | 69 |
| M | 400 | 32 | 750 | 75 |
| N | 430 | 35 | 930 | 93 |
| O | 460 | 37 | 510 | 51 |
| P | 410 | 33 | 860 | 86 |

Beispiel 2

Es wurden Düngerproben geprüft, die mit jeweils 0,01 Gewichtsteilen der Substanzen B bis H, I und L pro 100 Gewichtsteilen Substrat behandelt waren. Die dabei erhaltenen Messergebnisse sind zusammen mit den Blindwerten in der Tabelle III wiedergegeben.

Tabelle III

| Produkt | Kaliumchlorid Kraft (g) | % | NPK-Dünger Kraft (g) | % |
|---|---|---|---|---|
| Blindwert | | | | |
| | 1240 | 100 | 1000 | 100 |
| Erfindungsgemäss zu verwendende Produkte | | | | |
| B | 450 | 36 | 900 | 90 |
| C | 730 | 59 | 720 | 72 |
| D | 450 | 36 | 420 | 42 |
| E | 420 | 34 | 860 | 86 |
| F | 550 | 44 | 820 | 82 |
| G | 570 | 46 | 390 | 39 |
| H | 450 | 36 | 1100 | 110 |

Tabelle III Fortsetzung

| Produkt | Kaliumchlorid Kraft (g) | % | NPK-Dünger Kraft (g) | % |
|---|---|---|---|---|
| Vergleichssubstanzen | | | | |
| I | 605 | 49 | 760 | 76 |
| L | 440 | 35 | 1150 | 115 |

**Patentansprüche**

1. Verwendung von Additionsprodukten aus 6 bis 15 Mol Ethylenoxid und/oder Propylenoxid und 1 Mol eines β-Hydroxyalkylamins der Formel I,

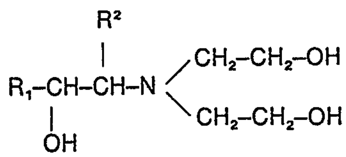

(I)

in der $R^1$ ein Alkylrest mit 1 bis 18 Kohlenstoffatomen und $R^2$ Wasserstoff oder ein Alkylrest mit 1 bis 16 Kohlenstoffatomen ist, wobei die Summe der Kohlenstoffatome in $R^1$ und $R^2$ 8 bis 18 beträgt, als Antibackmittel für Düngemittel.

2. Verwendung von Additionsprodukten nach Anspruch 1 in einer Menge von 0,005 bis 0,2 Gewichtsteilen pro 100 Gewichtsteile Düngemittel.

**Claims**

1. The use of adducts of from 6 to 15 moles of ethylene oxide and/or propylene oxide and 1 mole of a β-hydroxyalkylamine corresponding to the following formula

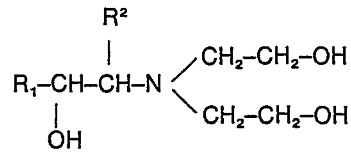

(I)

in which $R^1$ is an alkyl group containing from 1 to 18 carbon atoms and $R^2$ is hydrogen or an alkyl group containing from 1 to 16 carbon atoms, the sum of the carbon atoms in $R^1$ and $R^2$ amounting to between 8 and 18, as anticaking agents for fertilizers.

2. The use of adducts as claimed in Claim 1 in a quantity of from 0.005 to 0.2 part by weight to 100 parts by weight of fertilizer.

**Revendications**

1. Utilisation de produits d'addition de 6 à 15 moles d'oxyde d'éthylène et/ou d'oxyde de propylène et de 1 mole d'une β-hydroxyalkylamine de formule I

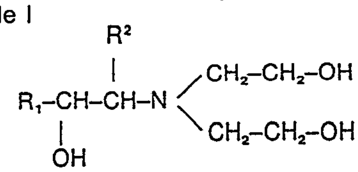

(I)

dans laquelle $R^1$ est un radical alkyle de 1 à 18 atomes et $R^2$ est un atome d'hydrogène ou un radical alkyle de 1 à 16 atomes de carbone, la somme des atomes de carbone de $R^1$ et $R^2$ étant de 8 à 18, comme agents anti-agglomérants pour engrais.

2. Utilisation de produits d'addition suivant la revendication 1 en quantite de 0,005 à 0,2 partie en poids pour 100 parties en poids d'engrais.